# EUROPÄISCHE PATENTSCHRIFT

(11) **EP 4 337 951 B1**
(45) Veröffentlichungstag und Bekanntmachung des Hinweises auf die Patenterteilung: **17.06.2026**
(21) Anmeldenummer: 22720576.2
(22) Anmeldetag: 31.03.2022
(51) Int. Cl.: G01N 30/44, B01D 15/18, B01D 15/40

(54) **CHROMATOGRAPHIEVERFAHREN UND -VORRICHTUNG, INSBESONDERE VERFAHREN UND VORRICHTUNG ZUR SUPERKRITISCHEN FLÜSSIGKEITSCHROMATOGRAPHIE**
CHROMATOGRAPHY METHOD AND DEVICE, IN PARTICULAR METHOD AND DEVICE FOR SUPERCRITICAL LIQUID CHROMATOGRAPHY
PROCÉDÉ ET DISPOSITIF DE CHROMATOGRAPHIE, EN PARTICULIER PROCÉDÉ ET DISPOSITIF DE CHROMATOGRAPHIE EN PHASE LIQUIDE SUPERCRITIQUE

(30) Priorität: 10.05.2021 LU 500141; 09.08.2021 LU 500521
(43) Veröffentlichungstag der Anmeldung: 20.03.2024
(73) Patentinhaber: K.D. Pharma Bexbach GMBH, 66450 Bexbach (DE)
(72) Erfinder: GIESSELMANN, Gideon, 54456 Tawern (DE); FRONZONI, Roberto, 66424 Homburg (DE); RAMOS-TERCERO, Elia, 4053 Basel (CH); SHOPOVA-GOSPODINOVA, Denitsa, 66901 Schönenberg-Kübelberg (DE); CALLA, Bruno, 66280 Sulzbach (DE)
(74) Vertreter: Patentanwälte Bernhardt / Wolff Partnerschaft mbB
(86) Internationale Anmeldenummer: PCT/EP2022/058552
(87) Internationale Veröffentlichungsnummer: WO 2022/238046

(56) Entgegenhaltungen:
- EP-A1- 1 982 752
- EP-A1- 3 173 782
- DE-T2- 69 401 506
- KESZLER L C ET AL: "Improving performance of simulated moving bed chromatography by fractionation and feed-back of outlet streams", JOURNAL OF CHROMATOGRAPHY A, ELSEVIER, AMSTERDAM, NL, vol. 1207, no. 1-2, 17 October 2008 (2008-10-17), pages 55 - 71, XP025473780, ISSN: 0021-9673, [retrieved on 20080813], DOI: 10.1016/J.CHROMA.2008.08.022
- SYLVIA FEIL: "Fettsäuren geben Signal für Rückzug von Entzündung", CHEMIE IN UNSERER ZEIT, VERLAG CHEMIE, WEINHEIM, DE, vol. 48, no. 4, 5 August 2014 (2014-08-05), pages 244, XP071178688, ISSN: 0009-2851, DOI: 10.1002/CIUZ.201490045

## Beschreibung

Die Erfindung betrifft ein Chromatographieverfahren, insbesondere Verfahren zur superkritischen Flüssigkeitschromatographie, bei dem ein zu trennender Ausgangsstoff mittels der superkritischen Flüssigkeitschromatographie in Fraktionen getrennt wird und zumindest eine der Fraktionen, die zumindest einen vorgegebenen Zielgehalt mindestens einer Zielkomponente des Ausgangsstoffs aufweisen, als Zielproduktfraktion abgeleitet wird, wobei die Fraktionen, die den vorgegebenen Zielgehalt nicht aufweisen, Restfraktionen bilden und zumindest ein Teil zumindest einer der Restfraktionen zu dem noch zu trennenden Ausgangsstoff gegeben wird.

Die Erfindung betrifft ferner eine Vorrichtung zur superkritischen Flüssigkeitschromatographie.

Chromatographieverfahren der obengenannten Art sind aus EP 1 982 752 A1 und der wissenschaftlichen Veröffentlichung KEßLER L C ET AL, "Improving performance of simulated moving bed chromatography by fractionation and feed-back of outlet streams" (JOURNAL OF CHROMATOGRAPHY A, ELSEVIER, AMSTERDAM, NL, vol. 1207, no. 1-2, ISSN 0021-9673, (20081017), pages 55 - 71) bekannt.

Aus der EP 3 173 782 A1 ist ein weiteres Chromatographieverfahren bekannt.

Ferner ist durch Benutzung bekannt, eine zu trennende Stoffmischung die Chromatographiesäule zu leiten, die eine stationäre Phase aufweist, welche z.B. eine sog. Packung aus porösem Material umfasst. Die verschiedenen Stoffe der Stoffmischung unterliegen beim Durchfluss durch die stationäre Phase unterschiedlichen Retentionen, d.h. sie durchströmen die stationäre Phase aufgrund unterschiedlich starker Wechselwirkungen in der stationären Phase unterschiedlich schnell. Dies macht die Trennung möglich.

Verfahren zur Durchführung von superkritischer Flüssigkeitschromatographie (SFC) werden u.a. dazu verwendet, um aus Fettsäuremischungen mehrfach ungesättigte Fettsäuren zu trennen.

Der Erfindung liegt die Aufgabe zugrunde, ein Verfahren der eingangs genannten Art zu schaffen, das einen höheren Ertrag liefert.

Erfindungsgemäß wird diese Aufgabe dadurch gelöst, dass zumindest ein Teil zumindest einer der Restfraktionen, deren Gehalt an der Zielkomponente weniger von dem vorgegebenen Zielgehalt abweicht als der Zielkomponentengehalt des Ausgangsstoffs, zu dem noch zu trennenden Ausgangsstoff gegeben wird.

Vorteilhaft werden die Restfraktionen oder zumindest Teile davon in dem Trennverfahren recycelt. Es wird die Möglichkeit geschaffen in einer einzigen Chromatographievorrichtung einen Stoff dem Trennverfahren mehrfach zu unterziehen. Vorteilhaft kann der Ertrag an einem Zielprodukt vergrößert werden.

Es versteht sich, dass die Restfraktionen mit dem letztgenannten Zielkomponentengehalt ggf. vollständig zu dem noch zu trennenden Ausgangsstoff gegeben werden können. Zweckmäßigerweise werden lediglich solche Restfraktionen, deren Gehalt an der Zielkomponente weniger von dem vorgegebenen Zielgehalt abweicht als der Zielkomponentengehalt des Ausgangsstoffs, oder zumindest Teile davon zu dem noch zu trennenden Ausgangsstoff gegeben.

Der Teil der Restfraktionen, deren Zielkomponentengehalt weniger von dem vorgegebenen Zielgehalt abweicht als der Zielkomponentengehalt des Ausgangsstoffs, wird innerhalb des erfindungsgemäßen Verfahrens direkt recycelt, indem er dem Ausgangsstoff, der zur Trennung vorgesehen ist, zugeführt wird. Dadurch wird einerseits der Gehalt an der Zielkomponente in dem mittels der Chromatographie zu verarbeitenden Trennstoffs mehr an den Zielgehalt angenähert, sodass sich ein größerer Ertrag an dem Zielprodukt erzielen lässt. Zum anderen kann die Zielkomponente, die sich in der zu recycelnden Restfraktion findet, der Zielproduktfraktion zugeführt werden.

Zweckmäßigerweise werden die Restfraktionen, deren Zielkomponentengehalt mehr von dem vorgegebenen Zielgehalt abweicht als derjenige des Ausgangsstoffs, zur weiteren Handhabung, insbesondere Weiterverarbeitung oder/und Entsorgung, abgeleitet.

In einer Ausführungsform der Erfindung ist der vorgegebene Zielgehalt ein Mindestgehalt oder/und ein Höchstgehalt. Der vorgegebene Zielgehalt ist typischerweise ein Mindestgehalt, wenn der Gehalt der jeweiligen Komponente im Zielprodukt im Vergleich zum Ausgangsstoff vergrößert werden soll. Der vorgegebene Zielgehalt ist typischerweise ein Höchstgehalt, wenn der Gehalt der jeweiligen Komponente im Zielprodukt im Vergleich zum Ausgangsstoff verringert werden soll.

Zweckmäßigerweise werden in dem Fall, dass der Zielgehalt ein Mindestgehalt ist, lediglich die Restfraktionen dem noch zu trennenden Ausgangsstoff zugeführt, deren Zielkomponentengehalt größer ist als derjenige des Ausgangsstoffs.

Vorzugsweise werden die Restfraktionen, deren Zielkomponentengehalt kleiner ist als derjenige des Ausgangsstoffs, zur weiteren Handhabung, insbesondere zur Weiterverarbeitung oder/und Entsorgung, abgeleitet.

Umgekehrt werden zweckmäßigerweise in dem Fall, dass der Zielgehalt ein Höchstgehalt ist, dem noch zu trennenden Ausgangsstoff zugeführt lediglich die Restfraktionen, deren Zielkomponentengehalt kleiner ist als derjenige des Ausgangsstoffs.

Bevorzugt werden dann die Restfraktionen, deren Zielkomponentengehalt größer ist als derjenige des Ausgangsstoffs, zur weiteren Handhabung, insbesondere zur Weiterverarbeitung oder/und Entsorgung, abgeleitet.

In einer weiteren Ausführungsform der Erfindung werden ein Gehalt zumindest zweier, ggf. mehrerer, verschiedener Zielkomponenten im Ausgangsstoff und in den Fraktionen bestimmt wird und vorzugsweise die verschiedenen Zielkomponentengehalte der Restfraktionen mit denjenigen des Ausgangsstoffs verglichen. Vorteilhaft können die Gehalte mehrerer Komponenten berücksichtigt werden. Insbesondere können für Zielkomponenten einzelner der Komponenten Mindestgehalte und für andere Höchstgehalte vorgesehen werden.

In einer Ausgestaltung der Erfindung werden die Gehalte an der Zielkomponente im Ausgangsstoff sowie in den Fraktionen, vorzugsweise mittels einer geeigneten Messeinrichtung, bestimmt, wobei die Zielkomponentengehaltsbestimmung vorzugsweise kontinuierlich erfolgt.

Zweckmäßigerweise wird der Zielkomponentengehalt der Restfraktionen mit demjenigen des Ausgangsstoffs verglichen. Anhand von Ergebnissen der Vergleiche wird entschieden, ob die Fraktionen als Zielproduktfraktionen oder Restfraktionen behandelt werden und insbesondere ob die Restfraktionen zu dem Ausgangsstoff gegeben werden oder zur weiteren Handhabung abgeleitet werden.

Vorgesehen sein kann, zumindest einzelne der Restfraktionen oder sämtliche Restfraktionen miteinander zu mischen und den Zielkomponentengehalt der Restfraktionenmischung zu bestimmen. Anhand des Zielkomponentengehalts der Restfraktionenmischung wird entschieden, ob die Restfraktionenmischung zu dem Ausgangsstoff gegeben wird oder zur weiteren Handhabung abgeleitet wird.

In der bevorzugten Ausführungsform der Erfindung werden zumindest die Bestimmung und die Vergleiche der Zielkomponentengehalte sowie eine Zuführung der Restfraktion zu dem zu trennenden Ausgangsstoff automatisch durchgeführt. Anhand der Zielkomponentengehaltsbestimmung wird erkannt, wie die jeweiligen Fraktionen zu handhaben sind. Ergibt die Zielkomponentengehaltsbestimmung, dass die jeweilige Fraktion einen derartigen Zielkomponentengehalt aufweist, dass sie als Zielproduktfraktion verwendet werden kann, wird die jeweilige Fraktion zweckmäßigerweise automatisch als Zielprodukt abgeleitet. Weist die Fraktion einen abweichenden Zielkomponentengehalt auf, wird die jeweilige Fraktion dem Ausgangsstoff vorzugsweise automatisch zugeführt oder entsorgt.

In einer weiteren Ausführungsform der Erfindung wird die Restfraktion dem noch zu trennenden Ausgangsstoff vor dessen Trennung mittels der Chromatographie zugeführt. Vorzugsweise ist dafür ein Behälter vorgesehen, in dem die Restfraktion zu dem Ausgangsstoff gegeben wird. Zweckmäßigerweise werden der Ausgangsstoff und die Restfraktion vor der Trennung gemischt.

In einer Ausgestaltung der Erfindung wird der Fluss der Restfraktion, die dem noch zu trennenden Ausgangsstoff vor dessen Trennung zugeführt wird, in Abhängigkeit vom Gehalt der Zielkomponente im Ausgangsstoff und/oder in der Zielproduktfraktion eingestellt, vorzugsweise geregelt.

Das erfindungsgemäße Chromatographieverfahren erweist sich als besonders vorteilhaft zur Durchführung von Verfahren zur superkritischen Flüssigkeitschromatographie. Es lässt sich ferner vorteilhaft anwenden für Flüssigchromatographie, insbesondere für Dünnschichtchromatographie oder Säulenchromatographie, insbesondere Niederdruckflüssigkeitschromatographie, Hochleistungsflüssigkeitschromatographie (HPLC), Gel-Permeations-Chromatographie (GPC) oder Ionenaustauschchromatographie (IC), oder Feld-Fluss-Fraktionierung (FFF).

Das erfindungsgemäße Chromatographieverfahren kann im sog. Batch-Verfahren durchgeführt werden. Die Trennung erfolgt dann zweckmäßigerweise schrittweise. Insbesondere wird in einem ersten Trennschritt eine Trennung in mehrere Fraktionen durchgeführt und die Fraktionen wie oben beschrieben gehandhabt. Ein nächster Schritt erfolgt ggf. unter Trennung des Ausgangsstoffs gemeinsam mit einer Restfraktion oder einem Teil davon.

Allerdings lässt sich das erfindungsgemäße Verfahren auch bei kontinuierlich durchgeführt Chromatographieverfahren anwenden. Solche Chromatographieverfahren, bei denen mehrere der Chromatographiesäulen miteinander verbunden sind, sind beispielsweise die True Moving Bed Chromatographie (TMB) und die Simulated Moving Bed Chromatographie (SMB).

Bei der SMB-Chromatographie sind mehrere der Chromatographiesäulen in Reihe miteinander verbunden. An unterschiedlichen Verbindungsstellen zwischen den Chromatographiesäulen werden das Stoffgemisch und ein Elutionsmittel eingegeben. Ebenfalls an anderen Verbindungsstellen werden ein Raffinat und ein Extrakt entnommen, wobei als Raffinat der Stoff oder ggf. die Stoffe entnommen werden, die bei der Chromatographie einer geringeren Retention unterliegen, und als Extrakt der Stoff bzw. die Stoffe entnommen werden, die bei der Chromatographie einer größeren Retention unterliegen. Folglich lassen sich die Stoffgemische mittels der bekannten Chromatographieverfahren je nach Handhabung der Chromatographie in zwei unterschiedliche Stoffuntergemische trennen, wobei ein erstes Stoffuntergemisch Stoffe enthält, die einer geringeren Retention unterliegen, und ein zweites Stoffuntergemisch Stoffe enthält, die einer größeren Retention unterliegen.

Zweckmäßigerweise wird das Verfahren kontinuierlich durchgeführt. Als besonders geeignet für eine kontinuierliche Durchführung des Verfahrens hat sich das Simulated moving bed (SMB)-Verfahren erwiesen.

Zur Verarbeitung mittels des erfindungsgemäßen Verfahrens eignen sich Ausgangsstoffe, die in einem Eluenten für Chromatographieverfahren lösbar sind.

Insbesondere für die superkritische Flüssigkeitschromatographie kann der Ausgangsstoff zumindest eine Substanz oder eine Mischung aus Substanzen sein, die in superkritischem CO₂ oder in einer Mischung aus superkritischen CO₂ und zumindest einem zusätzlichen Lösungsmittel, z.B. Methanol oder/und Ethanol, lösbar sind.

Das Verfahren hat sich als besonders vorteilhaft erwiesen, wenn der Ausgangsstoff eine Mischung von Fettsäuren und/oder Derivaten davon, vorzugsweise eine Mischung von ungesättigten, insbesondere mehrfach ungesättigten, Fettsäuren oder/und Derivaten davon ist oder umfasst. Die Zielkomponente kann dann eine der mehrfach ungesättigten Fettsäuren und/oder Derivaten davon sein. Besonders bevorzugt ist die Zielkomponente Eicosapentaensäure (EPA) und/oder Docosahexaensäure (DHA) sein.

Zweckmäßigerweise ist der Zielkomponentemindestgehalt an EPA 900 mg/g, vorzugsweise 970 mg/g.

Der Zielkomponentenmindestgehalt an DHA ist zweckmäßigerweise 850 mg/g, vorzugsweise 900 mg/g.

Der Ausgangsstoff kann ferner eine Mischung von Carbonsäuren und/oder Derivaten davon, vorzugsweise eine Mischung von Cannabinoiden und/oder Cannabinoidderivaten, sein oder umfassn. Der Zielkomponente ist vorzugsweise Cannabidiol, vorzugsweise CBD, oder Tetrahydrocannibinol (THC) oder Derivate, insbesondere Säuren, davon, vorzugsweise CBD/A, THC/A, CBG/A, CBN/A oder/und CBC/A.

In einer Ausführungsform der Erfindung ist oder umfasst der Ausgangsstoff eine Mischung, die zumindest einen Metabolit einer mehrfach ungesättigten Fettsäure, vorzugsweise von Eicosapentaensäure (EPA) und/oder von Docosahexaensäure (DHA) und/oder von Docosapentaensäure (DPA), umfasst oder einen Stoff umfasst, der dieselbe Zusammensatzung aufweist wie der Metabolit. Zweckmäßigerweise ist die Zielkomponente ein Metabolit einer mehrfach ungesättigten Fettsäure, vorzugsweise von Eicosapentaensäure (EPA) und/oder von Docosahexaensäure (DHA) und/oder von Docosapentaensäure (DPA), ist oder ein Stoff ist, der dieselbe Zusammensatzung aufweist wie der Metabolit.

In einer weiteren Ausgestaltung der Erfindung ist oder umfasst der Ausgangsstoff eine Mischung, die zumindest einen pre-resolving mediator (PRM) und/oder einen specialized pre-resolving mediator (SPM), der bzw. die vorzugsweise von EPA, DHA oder/und von DPA abgeleitet ist bzw. sind, enthält.

Zweckmäßigerweise ist die Zielkomponente zumindest ein pre-resolving mediator (PRM) und/oder ein specialized pre-resolving mediator (SPM), der bzw. die vorzugsweise von EPA, DHA oder/und von DPA abgeleitet ist bzw. sind, aus der Stoffmischung getrennt wird.

In einer weiteren Ausgestaltung der Erfindung ist oder umfasst der Ausgangsstoff eine Mischung von pre-resolving mediators (PRM), vorzugsweise 18-HEPE, 17-HDHA und/oder 14-HDHA, und/oder von specialized pre-resolving mediators (SPM), vorzugsweise Lipoxine, Resolvine, Protectine und/oder Maresine. Zweckmäßigerweise ist die Zielkomponente zumindest ein pre-resolving mediator (PRM), vorzugsweise 18-HEPE, 17-HDHA und/oder 14-HDHA, und/oder ein specialized pre-resolving mediator (SPM), vorzugsweise Lipoxin, Resolvin, Protectin und/oder Maresin.

Der pre-resolving mediator (PRM) ist vorzugsweise zumindest ein Stoff aus der Gruppe der Stoffe 18-HEPE, 17-HDHA, 14-HDHA.

Der specialized pre-resolving mediator (SPM)) ist vorzugsweise zumindest ein Stoff aus der Gruppe der Stoffe Lipoxin, Resolvin, Protectin, Maresin.

Das Lipoxin ist bevorzugt zumindest ein Stoff aus der Gruppe der Stoffe LxA4 (5S,6R, 1 5S-trihydroxy-7E,9E,111Z,13E-ETE), LxB4 (5S,14R,15S-trihydroxy-6E,8Z,10E,12E-ETE),
15-epi-LxA4 (5S,6R,15R-trihydroxy-7E,9E,11I, 13E-eicosatetraenoic acid), 15-epi-LxB4 (5S,14R,15R-trihydroxy-6E,8Z,10E,12E-eicosatrienoic acid).

Das Resolvin ist zweckmäßigerweise von EPA, DHA oder/und von DPA abgeleitet. Das Resolvin ist bevorzugt zumindest
- ein Stoff aus der Gruppe der Stoffe RvE1 (5S,12R,18R-trihydroxy-6Z,8E,10E,14Z,16E-EPA), 18S-RvE1 (5S,12R,18S-trihydroxy-6Z,8E,10E,14Z,16E-EPA), RvE2 (5S,18R-dihydroxy-6E,8Z,11Z,14Z,16E-EPA), RvE3 (17R,18R/S-dihydroxy-5Z,8Z,11Z,13E,15E-EPA),
   und/oder
- ein Stoff aus der Gruppe der Stoffe RvD 1 (7S,8R,17S-trihydroxy-4Z,9E,11E,13Z,15E,19Z-DHA), RvD2 (7S,16R,17S-trihydroxy-4Z,8E,10Z,12E,14E,19Z-DHA), RvD3 (4S,11R,17S-trihydroxy-5Z,7E,9E,13Z,15E,19Z-DHA), RvD4 (4S,5R,17S-trihydroxy-6E,8E,10Z,13Z,15E,19Z-DHA), RvD5 (7S,17S-dihydroxy-4Z,8E,10Z,13Z,15E,19Z-DHA), RvD6 (4S,17S-dihydroxy-5E,7Z,10Z,13Z,15E,19Z-DHA),
   und/oder
- ein Stoff aus der Gruppe der Stoffe RvT1 (7,13R,20-trihydroxy-8E,10Z,14E,16Z,18E-DPA), RvT2 (7,8,13R-trihydroxy-9E,11E,14E,16Z,19Z-DPA), RvT3 (7,12,13R-trihydroxy-8Z,10E,14E,16Z,19Z-DPA), RvT4 (7,13R-dihydroxy-8E,10Z,14E,16Z,19Z-DPA).

Das Protectin ist zweckmäßigerweise von DHA oder/und von DPA abgeleitet.

Das Protectin ist bevorzugt zumindest
- ein Stoff aus der Gruppe der Stoffe PD1 bzw. NPD1 (10R,17S-dihydroxy-4Z,7Z,11E,13E,15Z,19Z-DHA), PDX (10S,17S-dihydroxy-4Z,7Z,11E,13Z,15E,19Z-DHA), 22-hydroxy-PD1 (10R,17S,22-trihydroxy-4Z,7Z,11E,13E,15Z,19Z-DHA), 17-epi-PD1 bzw. AT-PD1 (10R,17R-dihydroxy-4Z,7Z,11E,13E,15Z,19Z-DHA), 10-epi-PD 1 bzw. ent-AT-NPD1 (10S,17S-Dihydroxy-4Z,7Z,11E,13E,15Z,19Z-DHA)
   und/oder
- ein Stoff aus der Gruppe der Stoffe PD1n-3 (10,17-dihydroxy-7,11,13,15,19-DPA), PD2n-3 (16,17-dihydroxy-7,10,12,14,19-DPA).

Das Maresin ist zweckmäßigerweise von DHA oder/und von DPA abgeleitet.

Das Maresin ist bevorzugt zumindest
- ein Stoff aus der Gruppe der Stoffe MaR1 (7R,14S-dihydroxy-4Z,8E,10E,12Z,16Z,19Z-DHA), MaR2 (13R,14S-dihydroxy-4Z,7Z,9E,11E,16Z,19Z-DHA), 7-epi-MaR1 (7S,14S-dihydroxy-4Z,8E,10Z,12E,16Z,19Z-DHA), MaR-L1 (14S,22-dihydroxy-4Z,7Z,10Z,12E,16Z,19Z-DHA), MaR-L2 (14R,22-dihydroxy-4Z,7Z,10Z,12E,16Z,19Z-DHA), und/oder
- ein Stoff aus der Gruppe der Stoffe MaR1n-3 (7S,14S-dihydroxy-8E,2Z,16Z,19Z-DPA), MaR2n-3 (13,14-dihydroxy-7,9,111,16,19-DPA), MaR3n-3 (13,14-dihydroxy-7,9,111,16,19-DPA).

Als Eluent für die superkritische Flüssigkeitschromatographie (SFC) wird vorzugsweise superkritisches Kohlendioxid, Propan, N-Pentan, Trifluormethanomaxenon, Wasser oder Ammoniak verwendet. Der Eluent kann als Co-Solventen ein Lösungsmittel, vorzugsweise Ethanol, Methanol, Isopropanol, Acetonitril, Tetrahydrofuran, Dichlormethan, Chloroform, Ethylacetate und/oder Trifluoressigsäure aufweisen.

Zweckmäßigerweise wird ein Eluent der Chromatographie nach Durchführen der Trennung erneut für die Durchführung der Chromatographie, so wie dies an sich z.B. für die superkritische Flüssigkeitschromatographie (SFC) aus dem Stand der Technik bekannt ist, verwendet. Er wird dazu vorzugsweise nach Abtrennung nach Durchführung der Flüssigkeitschromatographie in ein Eluentenreservoir, aus dem der Eluent zur Durchführung der Flüssigkeitschromatographie gespeist wird, geleitet.

Die eingangs genannte Vorrichtung umfasst einen an sich bekannten typischen Aufbau einer Chromatorgraphievorrichtung, insbesondere einer Vorrichtung zur superkritischen Flüssigkeitschromatographie. Insbesondere umfasst die Vorrichtung eine Trennsäule, ein Trennstoffreservoir, ein Eluentenreservoir sowie eine Einrichtung zur Entnahme der genannten Fraktionen. Das Trennstoffreservoir und das Eluentenreservoir sind derart mit der Trennsäule verbunden, dass der jeweilige Trennstoff und der Eluent der Trennsäule kontrolliert, vorzugsweise gesteuert und/oder geregelt, zugeführt werden können. Die Fraktionenentnahmeeinrichtung ist derart mit der Trennsäule verbunden, dass die jeweiligen Fraktionen, insbesondere geregelt und/oder gesteuert, aus der Trennsäule entnommen werden können. Ferner ist die Fraktionenentnahmeeinrichtung derart mit der Trennsäule verbunden, dass der Eluent oder das Eluentengemisch nach Durchführung der Trennung wieder in das Eluentenreservoir eingespeist werden kann. Zur Entnahme der verschiedenen Fraktionen ist sie vorzugsweise mit mehreren Fraktioniersäulen versehen, in welche die jeweiligen Fraktionen geleitet werden können. Vorzugsweise ist das Trennstoffreservoir mit einem Ausgangsstoffreservoir verbunden und wird, vorzugsweise, kontinuierlich mit dem Ausgangsstoff gespeist. Zweckmäßigerweise ist das Trennstoffreservoir ferner zur Zuführung der Reststofffraktionen, deren Zielkomponentengehalt größer ist als derjenige des Ausgangsstoffs, eingerichtet. Dazu kann eine Leitung zwischen der Fraktionenentnahmeeinrichtung und dem Trennstoffreservoir vorgesehen sein, über die sich die jeweilige Reststofffraktion dem Trennstoffreservoir zuführen lässt.

In einer besonders bevorzugten Ausführungsform der Erfindung ist die Fraktionenentnahmeeinrichtung dazu eingerichtet, die Zielproduktfraktion sowie die Restfraktionen, insbesondere abhängig von jeweiligen Zielkomponentengehalt, unterschiedlich weiterzuleiten. Zweckmäßigerweise weist die Fraktionsenentnahmeeinrichtung dazu mehrere, mit Ventilen versehene Leitungen auf, über die sich die Fraktionen wahlweise weiterleiten lassen. Die Zielproduktfraktionen werden vorzugsweise in einen dazu vorgesehen Zielproduktbehälter geleitet. Die geeigneten Restfraktionen werden in den Trennstoffbehälter geleitet. Die anderen Reststofffraktionen werden in einen Behälter zur weiteren Handhabung geleitet.

Die Vorrichtung umfasst zweckmäßigerweise eine Einrichtung zur Messung des Zielkomponentengehalts im Ausgangsstoff und eine Einrichtung zur Messung des Zielkomponentengehalts in den Fraktionen. Ferner kann eine Einrichtung zur Messung des Zielkomponentengehalts im Trennstoff, der sich im Trennbehälter befindet, in welchem die Restfraktion zu dem Ausgangsstoff gegeben wird, vorgesehen sein.

In einer Ausgestaltung der Erfindung ist die Vorrichtung derart vorgesehen, dass die Fraktionenentnahmeeinrichtung in Abhängigkeit von Messergebnissen mittels der Messeinrichtungen die Fraktionen entsprechend weiterleitet. Dazu kann die Vorrichtung mit einer Regelungs- und/oder Steuerungseinrichtung versehen sein, die die Messwerte ausliest, auswertet und entsprechend der jeweiligen Auswerteergebnisse die Fraktionenentnahmeneinrichtung, insbesondere unter Handhabung der Ventile, derart einstellt, dass die beabsichtigte Stoffweiterleitung erfolgt.

Die Erfindung wird nachfolgend anhand von Ausführungsbeispielen und den beigefügten Zeichnungen, die sich auf die Ausführungsbeispiele beziehen, näher erläutert. Es zeigen:
- Fig. 1: schematisch eine erfindungsgemäße Vorrichtung,
- Fig. 2: schematisch einen Teil einer erfindungsgemäßen Vorrichtung nach Fig. 1, und
- Fig. 3: schematisch eine weitere erfindungsgemäße Vorrichtung

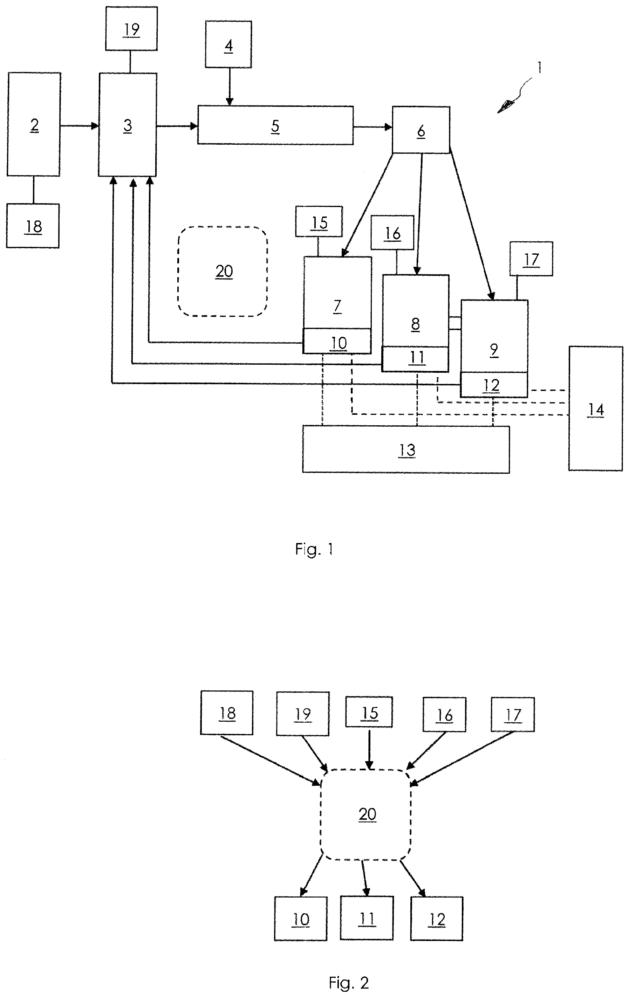

A. Vorrichtung nach Fig. 1 und 2:
Fig. 1 zeigt schematisch eine erfindungsgemäße Vorrichtung 1 zur superkritischen Flüssigkeitschromatographie. Die Vorrichtung 1 weist die an sich bekannten Bauteile einer SFC-Vorrichtung auf, wie sie bspw. in der DE 199 34 168 A1 beschrieben ist. Insbesondere umfasst sie eine Trennsäule 5, welche mit einem Ausgangsstoff aus einem Ausgangsstoffreservoir 2 und einem Eluenten aus einem Eluentenreservoir 4 beschickt wird.

Bei der Trennung mittels der Trennsäule 5 erzeugte Fraktionen werden über eine Fraktioniereinrichtung 6 in Fraktioniersäulen 7,8,9 geleitet. Jede der Fraktioniersäulen 7,8,9 ist über Leitungen jeweilig mit einem Zielproduktbehälter 13, einem Reststoffbehälter 14 und einem Trennstoffbehälter 3 verbunden.

Ferner weist jede der Fraktioniersäulen 7,8,9 jeweils eine schaltbare Ventileinrichtung 10,11,12 auf, mittels welcher sich einstellen lässt, in welchen Behälter die Fraktionen, die jeweilig in den Fraktioniersäulen 7,8,9 gewonnen worden sind geleitet werden. Folglich können mittels der schaltbaren Ventileinrichtungen 10,11,12 die jeweiligen Fraktionen aus den Fraktioniersäulen 7,8,9 wahlweise in jeden der Behälter 3,13,14 geleitet werden.

Der Trennstoffbehälter 3 wird mit dem Ausgangsstoff aus dem Ausgangsstoffreservoir 2 gespeist. Das in der Trennsäule 5 zu trennende Material wird aus dem Trennstoff
behälter 3 gespeist.

Das Ausgangsstoffreservoir 2 und die Fraktioniersäulen 7,8,9 sowie optional der Trennstoffbehälter3 sind mit jeweils einer Messeinrichtung 15,16,17,18,19 versehen, die dazu vorgesehen ist, den Gehalt zumindest einer Komponente eines Stoffs in dem jeweiligen Behältnis zu bestimmen.

Die Vorrichtung 1 umfasst eine Regelung 20, die, wie Fig. 2 schematisch zeigt, dazu eingerichtet ist, Messdaten von den Messeinrichtung15, 16, 17, 18, 19 zu empfangen und anhand der Messdaten die schaltbaren Ventileinrichtungen 10,11,12 einzustellen.

Bei Durchführung einer superkritischen Flüssigkeitschromatographie wird der Trennbehälter 3 mit Ausgangsstoff aus dem Ausgangsstoffreservoir 2 gespeist und der Stoff aus dem Trennbehälter unter Zuführung des Eluenten 4 in der Trennsäule 5 getrennt. Die verschiedenen erzeugte Fraktionen werden über die Fraktioniereinrichtung 6 in die Fraktioniersäulen 7,8,9 getrennt und der Gehalt an einem Zielprodukt in den Fraktionen in den jeweiligen Fraktioniersäulen 7,8,9 mittels der Messeinrichtungen 15,16,17 gemessen. Ferner wird der Gehalt an dem Zielprodukt in dem Ausgangsstoffreservoir 2 und ggf. in dem Trennbehälter 3 mittels der Messeinrichtungen 18,19 gemessen.

In der Regelung 20 sind Bedingungen hinterlegt, anhand derer Ventile der Ventileinrichtungen 10,11,12 eingestellt werden.

Eine erste Bedingung ist eine Zielproduktmindestgehalt. Bei Fraktionen, die vorgegebene Zielproduktmindestgehalt gemäß der jeweiligen Messung aufweisen, werden die Ventile derart geschaltet, dass diese Fraktionen in den Zielproduktbehälter 13 geleitet werden.

Eine weitere Bedingung ist, dass der Zielproduktgehalt kleiner ist als der Zielproduktmindestgehalt aber größer als der Zielproduktgehalt des Ausgangsstoffs, der mittels der Messeinrichtung 18 gemessen wird. Erfüllt eine Fraktion aus einer der Fraktioniersäulen 7,8,9 diese Bedingung, wird die Fraktion in den Trennbehälter 3 gespeist und gemeinsam mit dem noch nicht bearbeiteten Ausgangsstoff in der Trennsäule 5 getrennt.

Erfüllt eine der Fraktionen aus einer der Fraktioniersäulen 7,8,9 keine der letztgenannten Bedingungen, wird sie in den Reststoffbehälter 14 geleitet.

### Beispiel 1:

In der oben beschriebenen Vorrichtung 1 wird als Ausgangsstoff ein Öl verarbeitet, das 20 Gew.-% EPA und 70 Gew.-% DHA aufweist. Es kann sich dabei um ein Öl handeln, das aus Fischöl oder Algenöl hergestellt worden ist.

Ziel der Verarbeitung mittels der Vorrichtung 1 ist, ein Öl zu gewinnen, das einen DHA-Gehalt von mindestens 90 Gew.-% aufweist.

Das zu verarbeitende Öl befindet sich in dem Ausgangsstoffreservoir 2.

Als Eluent, der im Eluentenreservoir 4 vorgesehen ist, wird eine Mischung aus CO₂ mit Ethanol als Co-Solventen verwendet. Nach Durchführung der superkritischen Flüssigkeitschromatographie wird in der Fraktioniersäule 7 eine Fraktion gebildet, die
68 Gew.-% DHA aufweist, in der Fraktioniersäule 8 eine Fraktion gebildet, die
83 Gew.-% DHA aufweist und in Fraktioniersäule 9 eine Fraktion gebildet, die
93 Gew.-% DHA enthält.

Entsprechend der Messergebnisse werden die Ventileinrichtungen 10,11,12 derart geschaltet, dass Fraktion aus der Fraktioniersäule 7, die einen kleineren Gehalt an DHA aufweist als der Ausgangsstoff, in den Reststoffbehälter 14 geleitet wird. Die Ventileinrichtung 11 wird so geschaltet, dass die Fraktion aus der Fraktioniersäule 8, die mit 83 Gew.-% DHA einen kleineren Gehalt als dem Zielproduktgehalt, aber einen größeren Gehalt als den Gehalt des Ausgangsstoffs aufweist, in den Trennstoffbehälter geleitet wird. Die Fraktion aus der Fraktioniersäule 9 weist mit 93 Gew.-% DHA einen DHA-Gehalt auf, der größer ist als der Zielproduktmindestgehalt von 90 Gew.-% DHA und wird deshalb in den Zielproduktbehälter 13 geleitet.

### Beispiel 2:

Ausgangsdaten wie oben für Beispiel 1 beschrieben.

Allerdings werden die Fraktionen aus den Fraktionsiersäulen, die den Zielproduktmindestgehalt von 90 Gew.-% DHA nicht erfüllen, miteinander zu einem Reststoffgemisch vermischt und der DHA-Gehalt der Mischung gemessen. Weist das Reststoffgemisch einen DHA-Gehalt auf, der größer als der des Ausgangsstoffs, wird es in den Trennstoffbehälter 3 gegeben und dort mit dem Ausgangsstoff gemischt. Ist der DHA-Gehalt des Reststoffgemischs kleiner als derjenige des Ausgangsstoffs, wird es in den Reststoffbehälter 14 geleitet.

### Beispiel 3:

Der oben beschriebenen Vorrichtung 1 wird als Ausgangsstoff ein Öl verarbeitet, das 20 Gew.-% EPA, 70 Gew.-% DHA und 4 Gew.-% Arachidonsäure (ARA) aufweist. Es kann sich dabei um ein Öl handeln, das aus Fischöl oder Algenöl hergestellt worden ist.

Ziel der Verarbeitung mittels der Vorrichtung 1 ist, ein Öl zu gewinnen, das einen DHA-Gehalt von mindestens 90 Gew.-% und einen ARA-Gehalt < 0,5 % aufweist.

Das zu verarbeitende Öl befindet sich in dem Ausgangsstoffreservoir 2.

Als Eluent, der im Eluentenreservoir 4 vorgesehen ist, wird eine Mischung aus CO₂ mit Ethanol als Co-Solventen verwendet. Nach Durchführung der superkritischen Flüssigkeitschromatographie wird in der Fraktioniersäule 7 eine Fraktion gebildet, die
66 Gew.-% DHA und 3,8 Gew.-% ARA aufweist, in der Fraktioniersäule 8 eine Fraktion gebildet, die 83 Gew.-% DHA und 1,7 Gew.-% ARA aufweist und in Fraktioniersäule 9 eine Fraktion gebildet, die 93 Gew.-% DHA und 0,3 Gew.-% ARA enthält.

Entsprechend der Messergebnisse werden die Ventileinrichtungen 10,11,12 derart geschaltet, dass Fraktion aus der Fraktioniersäule 7, die einen kleineren Gehalt an DHA und einen größeren Gehalt an ARA aufweist als der Ausgangsstoff, in den Reststoffbehälter 14 geleitet wird. Die Ventileinrichtung 11 wird so geschaltet, dass die Fraktion aus der Fraktioniersäule 8, die mit 83 Gew.-% DHA für DHA einen kleineren Gehalt als dem Zielproduktgehalt, aber einen größeren Gehalt als den Gehalt des Ausgangsstoffs aufweist, und mit und 1,7 Gew.-% ARA, für ARA einen größeren Gehalt als dem Zielproduktgehalt, aber einen kleineren Gehalt als den Gehalt des Ausgangsstoffs aufweist, in den Trennstoffbehälter geleitet wird. Die Fraktion aus der Fraktioniersäule 9 weist mit 93 Gew.-% DHA einen DHA-Gehalt auf, der größer ist als der DHA-Zielproduktmindestgehalt von 90 Gew.-% DHA, und mit 0,3 Gew.-% ARA einen ARA-Gehalt auf, der kleiner ist als der ARA-Zielproduktmaximalgehalt, und wird deshalb in den Zielproduktbehälter 13 geleitet.

### Beispiel 4:

In der oben beschriebenen Vorrichtung 1 wird im Ausgangsstoffreservoir als Ausgangsstoff ein Öl vorgesehen, das 72 Gew.-% EPA, 12 Gew.-% DHA und 16 Gew.-% SDA aufweist. Es kann sich dabei um ein Öl handeln, das aus Fischöl oder Algenöl hergestellt worden ist.

Als Eluent, der im Eluentenreservoir 4 vorgesehen ist, wird eine Mischung aus CO₂ mit Ethanol als Co-Solventen verwendet. Gehalte an EPA, DHA und SDA werden mittels der Messeinrichtung 15,16,17,18,19 bestimmt und dementsprechend wie oben erläutert geschaltet.

Ziel der Verarbeitung mittels der Vorrichtung 1 ist, ein Öl zu gewinnen, das einen EPA-Gehalt von mindestens 96 Gew.-% aufweist. Eine Fraktion mit einem derartigen EPA-Gehalt wird in Zielproduktbehälter 13 gegeben.

Ferner werden Fraktionen, die ≤ 96 Gew.-% EPA aufweisen, aber ≥75 Gew.-% EPA, < 3 Gew.- % DHA und < 6 Gew.- % SDA enthalten, in den Trennstoffbehälter 3 geleitet.

Fraktionen die keine der vorgenannten Gehalte aufweisen, werden in den Reststoffbehälter 14 gegeben.

### Beispiel 5:

Der oben beschriebenen Vorrichtung 1 wird als Ausgangsstoff ein Öl verarbeitet, das 70 Gew.-% CBD aufweist. Es kann sich dabei um ein Extrakt handeln, das aus Hanf hergestellt worden ist.

Ziel der Verarbeitung mittels der Vorrichtung 1 ist, ein Öl zu gewinnen, das einen CBD-Gehalt von mindestens 90 Gew.-% aufweist.

Das zu verarbeitende Öl befindet sich in dem Ausgangsstoffreservoir 2.

Als Eluent, der im Eluentenreservoir 4 vorgesehen ist, wird eine Mischung aus CO₂ mit Ethanol als Co-Solventen verwendet. Nach Durchführung der superkritischen Flüssigkeitschromatographie wird in der Fraktioniersäule 7 eine Fraktion gebildet, die
63 Gew.-% CBD aufweist, in der Fraktioniersäule 8 eine Fraktion gebildet, die
87 Gew.-% CBD aufweist und in Fraktioniersäule 9 eine Fraktion gebildet, die
95 Gew.-% CBD enthält.

Entsprechend der Messergebnisse werden die Ventileinrichtungen 10,11,12 derart geschaltet, dass Fraktion aus der Fraktioniersäule 7, die einen kleineren Gehalt an CBD aufweist als der Ausgangsstoff, in den Reststoffbehälter 14 geleitet wird. Die Ventileinrichtung 11 wird so geschaltet, dass die Fraktion aus der Fraktioniersäule 8, die mit 87 Gew.-% CBD einen kleineren Gehalt als dem Zielproduktgehalt, aber einen größeren Gehalt als den Gehalt des Ausgangsstoffs aufweist, in den Trennstoffbehälter geleitet wird. Die Fraktion aus der Fraktioniersäule 9 weist mit 95 Gew.-% CBD einen CBD-Gehalt auf, der größer ist als der Zielproduktmindestgehalt von 90 Gew.-% CBD und wird deshalb in den Zielproduktbehälter 13 geleitet.

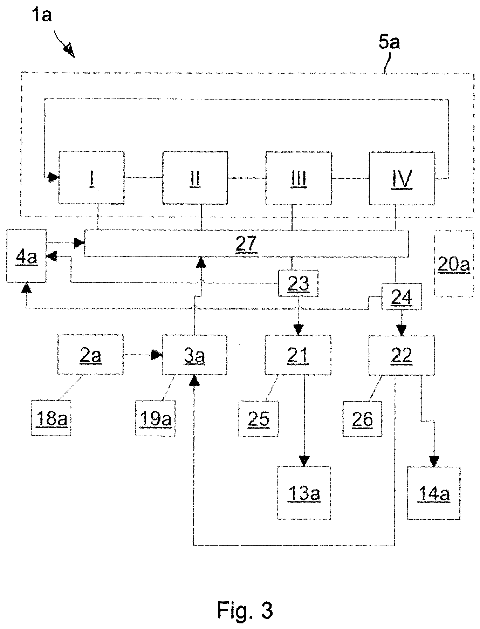

### B. Vorrichtung nach Fig. 3:

In Fig. 3 ist schematisch eine weitere erfindungsgemäße Vorrichtung 1a gezeigt. Zum Trennen einer Stoffmischung weist die Vorrichtung 1a eine Chromatographieeinrichtung 5a auf, die zur Durchführung einer simulated moving bed chromatography (SMB) geeignet ist. Die Chromatographieeinrichtung 5a weist mehrere miteinander verbundene Trennsäulen auf, die gemeinsam Zonen I, II, III, IV bilden. Wie an sich für SMB-Verfahren bekannt, wird der Chromatographieeinrichtung 5a an wechselnden Stellen das zu trennende Stoffgemisch und ein Eluent zugeführt sowie ebenfalls an sich wechselnden Stellen ein Raffinat und ein Extrakt entnommen.

Dazu ist eine Leitungseinrichtung 27 vorgesehen, die geeignete Leitungen und Ventile und ggf. Anschlüsse sowie eine Einrichtung zur Einstellung der Ventile umfasst. Die Leitungseinrichtung 27 kann ferner zumindest eine Pumpe, vorzugsweise mehrere Pumpen, aufweisen, um die Möglichkeit zu schaffen, auf Stoffflüsse in den Leitungen einwirken zu können.

Die Vorrichtung 1a weist zur Speisung der Chromatographieeinrichtung 5a mit dem zu trennenden Stoffgemisch einen Trennstoffbehälter 3a auf, der einem Ausgangsstoffreservoir 2a verbunden ist, in welchem der zu trennende Ausgangsstoff angeordnet ist. Mittels der Chromatographieeinrichtung 5a entnommenes Raffinat wird in einen Raffinatbehälter 21 und entnommenes Extrakt in einen Extraktbehälter 22 geleitet. Vor Leitung des Raffinats und des Extrakts in die jeweiligen Behälter 21,22 können in Separationseinrichtungen 23,24 der Eluent, insbesondere durch Verdampfung, jeweilig vom Raffinat bzw. vom Extrakt getrennt werden. Die Separationseinrichtungen 23,24 können z.B. durch einen Fallfilmverdampfer gebildet sein. Der Eluent aus den Sepatrationseinrichtungen 23,24 kann in einen Eluentenreservoir rückgeführt werden.

Je nach Zielproduktgehalt bzw. Zielproduktgehalten wird das Raffinat in einen Zielproduktbehälter 13a oder zum Zwecke des Recyclings in den Trennstoffbehälter 3a geleitet. Der Extrakt wird, ebenfalls in Abhängigkeit vom Zielproduktgehalt, in den Trennstoffbehälter 3a oder in einen Reststoffbehälter 14a gegeben.

Die Stoffmischung aus dem Trennstoffbehälter 3a, die aus dem Ausgangsstoff, der über das Ausgangsstoffreservoir 2a zugeführt wird, und ggf. aus Raffinat und/oder Extrakt gemischt wird, wird nun die Chromatographieeinrichtung 5a gegeben. Dort erfolgt eine kontinuierliche Stofftrennung.

Wie Fig. 3 zeigt, ist die Chromatographieeinrichtung 5a über die Leitungseinrichtung 27 mit dem Raffinatbehälter 21, dem Extraktbehälter 22, dem Reststoffbehälter 14a sowie dem Trennstoffbehälter 3a verbunden.

Wie Fig. 3 zu entnehmen ist, ist für den Trennstoffbehälter 3a eine Messeinrichtung 19a, für den Raffinatbehälter 21 eine Messeinrichtung 25 und für den Extraktbehälter eine Messeinrichtung 26 vorgesehen, mittels derer sich der Zielproduktgehalt bzw. die Zielproduktgehalte der jeweilig dort angeordneten Stoffe gemessen werden können. Ferner kann das Ausgangsstoffreservoir 2a mit einer Messeinrichtung 18a zur Bestimmung des Produktgehalts bzw. der Zielproduktgehalte versehen sein.

In analoger Weise wie oben anhand der Fig. 1 und 2 erläutert ist, kann die Vorrichtung 1a eine Regelungs- und/oder Steuerungseinrichtung 20a aufweisen, die unter Berücksichtigung der durch die Messeinrichtungen 19a,25,26 und ggf. 18a ermittelten Messwerte einstellt, wie die Stoffmischung im Trennstoffbehälter 3a aus dem Ausgangsstoff, dem Raffinat und dem Extrakt gemischt wird und/oder wieviel der Stoffmischung der Chromatographieeinrichtung 5a zugeführt wird. Es versteht sich, dass die Regelungs- und/oder Steuerungseinrichtung 20a dazu derart eingerichtet ist, dass sie die Leitungseinrichtung 27, insbesondere deren Ventile und ggf. Pumpen, einstellen kann.

### Beispiel 6:

In der oben beschriebenen Vorrichtung 1a wird als Ausgangsstoff ein Öl verarbeitet, das 60 Gew.-% EPA, 15 Gew.-% DHA und 10 Gew.-% ARA aufweist. Es kann sich dabei um ein Öl handeln, das aus Fischöl oder Algenöl hergestellt worden ist.

Ziel der Verarbeitung mittels der Vorrichtung 1a ist, ein Öl zu gewinnen, das einen DHA-Gehalt von mindestens 90 Gew.-% aufweist.

Das zu verarbeitende Öl befindet sich in dem Ausgangsstoffreservoir 2a.

Als Eluent, der im Eluentenreservoir 4 vorgesehen ist, wird Ethanol verwendet.

Im Zuge der kontinuierlichen Stofftrennung mittels der Chromatographieeinrichtung 5a im SMB-Verfahren wird als Raffinat ein Stoffgemisch entnommen, dessen EPA-Gehalt zwischen 86 Gew.-% und 97,5 Gew.-% variiert.

Die Regelungs- und/oder Steuereinrichtung 20a ist derart programmiert, dass das Raffinat in den Zielproduktbehälter 13a geleitet wird, wenn der EPA-Gehalt > 90 Gew.-% ist, und in den Trennstoffbehälter geleitet wird, wenn der EPA-Gehalt ≤ 90 Gew.-% ist.

Ferner ist die Regelungs- und/oder Steuereinrichtung 20a ist derart programmiert, dass das Extrakt in den Trennstoffbehälter geleitet wird, wenn der EPA-Gehalt > 70 Gew.-% ist und der ARA-Gehalt < 10 Gew.-% ist, und sonst in den Reststoffbehälter 14a geleitet wird.

Die Regelungs- und/oder Steuereinrichtung 20a kann ferner vorgesehen sein derart, dass die Menge an jeweilig aus dem Ausgangsstoffreservoir 2a, dem Raffinatbehälter 21 und dem Extraktbehälter in den Trennstoffbehälter 3a gegebenen Stoffmengen so eingestellt werden, dass die jeweiligen Gehalte an EPA, DHA und ARA in einem gewissen, vorgegebenen Bereich liegen.

## Patentansprüche

1. Chromatographieverfahren, insbesondere Verfahren zur superkritischen Flüssigkeitschromatographie, bei dem ein zu trennender Ausgangsstoff mittels der Chromatographie in Fraktionen getrennt wird und zumindest eine der Fraktionen, die zumindest einen vorgegebenen Zielgehalt mindestens einer Zielkomponente des Ausgangsstoffs aufweisen, als Zielproduktfraktion abgeleitet wird, wobei die Fraktionen, die den vorgegebenen Zielgehalt nicht aufweisen, Restfraktionen bilden und zumindest ein Teil zumindest einer der Restfraktionen zu dem noch zu trennenden Ausgangsstoff gegeben wird,
**dadurch gekennzeichnet,**
**dass** zumindest ein Teil zumindest einer der Restfraktionen, deren Gehalt an der Zielkomponente weniger von dem vorgegebenen Zielgehalt abweicht als der Zielkomponentengehalt des Ausgangsstoffs, zu dem noch zu trennenden Ausgangsstoff gegeben wird.

2. Verfahren nach Anspruch 1,
**dadurch gekennzeichnet,**
**dass** die Restfraktionen, deren Zielkomponentengehalt mehr von dem vorgegebenen Zielgehalt abweicht als derjenige des Ausgangsstoffs, zur weiteren Handhabung, insbesondere Weiterverarbeitung oder/und Entsorgung, abgeleitet werden, wobei der vorgegebene Zielgehalt vorzugsweise ein Minimalgehalt oder/und ein Maximalgehalt ist.

3. Verfahren nach Anspruch 2,
**dadurch gekennzeichnet,**
**dass** ein Gehalt der Zielkomponente im Ausgangsstoff und in den Fraktionen bestimmt wird und vorzugsweise die Zielkomponentengehalte der Restfraktionen mit derjenigen des Ausgangsstoffs verglichen werden.

4. Verfahren nach einem der Ansprüche 1 bis 3,
**dadurch gekennzeichnet,**
**dass** ein Gehalt zumindest zweier, ggf. mehrerer, verschiedener Zielkomponenten im Ausgangsstoff und in den Fraktionen bestimmt wird und vorzugsweise die verschiedenen Zielkomponentengehalte der Restfraktionen mit denjenigen des Ausgangsstoffs verglichen werden.

5. Verfahren nach einem der Ansprüche 1 bis 4,
**dadurch gekennzeichnet,**
**dass** das Verfahren kontinuierlich durchgeführt wird.

6. Verfahren nach einem der Ansprüche 1 bis 5,
**dadurch gekennzeichnet,**
**dass** zumindest die Bestimmung und die Vergleiche der Zielkomponentengehalte sowie eine Zuführung der Restfraktion zu dem zu trennenden Ausgangsstoff automatisch durchgeführt werden.

7. Verfahren nach einem der Ansprüche 1 bis 6,
**dadurch gekennzeichnet,**
**dass** die Restfraktion dem noch zu trennenden Ausgangsstoff vor dessen Trennung mittels der Chromatographie zugeführt wird, wobei das Ausgangsstoff und die Restfraktion vorzugsweise vor der Trennung gemischt werden.

8. Verfahren nach Anspruch 7,
**dadurch gekennzeichnet,**
**dass** der Fluss der Restfraktion, die dem noch zu trennenden Ausgangsstoff vor dessen Trennung zugeführt wird, in Abhängigkeit vom Gehalt der Zielkomponente im Ausgangsstoff und/oder in der Zielproduktfraktion geregelt wird.

9. Verfahren nach einem der Ansprüche 1 bis 8,
**dadurch gekennzeichnet,**
**dass** das Ausgangsstoff
- eine Mischung von Fettsäuren und/oder Derivaten davon, vorzugsweise eine Mischung von ungesättigten, insbesondere mehrfach ungesättigten, Fettsäuren und/oder Derivaten davon, und/oder
- eine Mischung, vorzugsweise eine Mischung von Carbonsäuren und/oder Derivaten davon, vorzugsweise eine Mischung von Cannabinoiden und/oder Derivaten davon, und/oder
- eine Mischung, die einen Metabolit einer mehrfach ungesättigten Fettsäure, vorzugsweise von Eicosapentaensäure (EPA) und/oder von Docosahexaensäure (DHA) und/oder von Docosapentaensäure (DPA), oder einen Stoff enthält, der dieselbe Zusammensatzung aufweist wie der Metabolit, und/oder
- eine Mischung, die zumindest einen pre-resolving mediator (PRM) und/oder einen specialized pre-resolving mediator (SPM), der bzw. die vorzugsweise von EPA, DHA oder/und von DPA abgeleitet ist bzw. sind, enthält und/oder
- eine Mischung, die zumindest einen pre-resolving mediator (PRM), vorzugsweise 18-HEPE, 17-HDHA und/oder 14-HDHA, und/oder von specialized pre-resolving mediator (SPM), vorzugsweise Lipoxine, Resolvine, Protectine und/oder Maresine, enthält,
ist oder umfasst.

10. Verfahren nach einem der Ansprüche 1 bis 9,
**dadurch gekennzeichnet,**
**dass** die Zielkomponente eine mehrfach ungesättigte Fettsäure, vorzugsweise Eicosapentaensäure (EPA) und/oder Docosahexaensäure (DHA), ist oder Cannabidiol (CBD) oder Tetrahydrocannabinol (THC) ist.

11. Verfahren nach einem der Ansprüche 1 bis 10,
**dadurch gekennzeichnet,**
**dass** die Zielkomponente ein Metabolit einer mehrfach ungesättigten Fettsäure, vorzugsweise von Eicosapentaensäure (EPA) und/oder von Docosahexaensäure (DHA) und/oder von Docosapentaensäure (DPA), ist oder ein Stoff ist, der dieselbe Zusammensatzung aufweist wie der Metabolit.

12. Verfahren nach einem der Ansprüche 1 bis 11,
**dadurch gekennzeichnet,**
**dass** die Zielkomponente ein pre-resolving mediator (PRM), vorzugsweise 18-HEPE, 17-HDHA und/oder 14-HDHA, und/oder zumindest ein specialized pre-resolving mediator (SPM), vorzugsweise Lipoxin, Resolvin, Protectin und/oder Maresin, ist

13. Chromatographievorrichtung, insbesondere Vorrichtung zur superkritischen Flüssigkeitschromatographie, die zumindest eine Trennsäule (5) zum Trennen eines Ausgangsstoffs in Fraktionen, eine Einrichtung zur Entnahme der Fraktionen, eine Einrichtung zur Ableitung zumindest einer der Fraktionen, die einen vorgegebenen Zielgehalt mindestens einer Zielkomponente des Ausgangsstoffs aufweisen, und eine Einrichtung zur Leitung zumindest eines Teils der Fraktionen, die den vorgegebenen Zielgehalt nicht aufweisen, zu dem noch zu trennenden Ausgangsstoff, aufweist,
**dadurch gekennzeichnet,**
**dass** die Leitungseinrichtung dazu eingerichtet ist, zumindest einen Teils der Fraktionen, deren Gehalt an der Zielkomponente weniger von dem vorgegebenen Zielgehalt abweicht als der Zielkomponentengehalt des Ausgangsstoffs, zu dem noch zu trennenden Ausgangsstoff zu leiten.

14. Vorrichtung nach Anspruch 13,
**gekennzeichnet durch** eine Einrichtung zur Ableitung zumindest der Fraktionen, deren Zielkomponentengehalt mehr von dem vorgegebenen Zielgehalt abweicht als derjenige des Ausgangsstoffs, vorzugsweise zur weiteren Handhabung, insbesondere Weiterverarbeitung oder/und Entsorgung.

15. Vorrichtung nach einem der Ansprüche 13 bis 14,
**gekennzeichnet durch** eine Einrichtung (15,16,17) zum Messen des Gehalts an der Zielkomponente in den Fraktionen und vorzugsweise durch eine Einrichtung zum Regeln und/oder Steuern der Fraktionenentnahmeneinrichtung, die dazu vorgesehen ist, durch die Messeinrichtungen ermittelte Messwerte zum Regeln und/oder Steuern als Regel- und/oder Stellgröße zu verwenden.

## Claims

1. Chromatography method, especially method of supercritical fluid chromatography, in which a starting material to be separated is separated into fractions by means of chromatography and at least one of the fractions having at least a defined target content of at least one target component from the starting material is diverted off as target product fraction, where the fractions that do not have the defined target content form residual fractions and at least a portion of at least one of the residual fractions is added to the starting material yet to be separated,
**characterized in that**
at least a portion of at least one of the residual fractions wherein the content of the target component deviates less from the defined target content than the target component content of the starting material is added to the starting material yet to be separated.

2. Method according to Claim 1,
**characterized in that**
the residual fractions wherein the target component content deviates more from the defined target content than that in the starting material are diverted off for further handling, especially further processing or/and disposal, where the defined target content is preferably a minimum content or/and a maximum content.

3. Method according to Claim 2,
**characterized in that**
a content of the target component in the starting material and in the fractions is determined, and the target component contents of the residual fractions are preferably compared with those of the starting material.

4. Method according to any of Claims 1 to 3,
**characterized in that**
a content of at least two, and optionally more than two, different target components in the starting material and in the fractions is determined and the different target component contents of the residual fractions are preferably compared with those of the starting material.

5. Method according to any of Claims 1 to 4,
**characterized in that**
the method is conducted continuously.

6. Method according to any of Claims 1 to 5,
**characterized in that**
at least the determination and the comparisons of the target component contents and a feeding of the residual fraction to the starting material to be separated are conducted automatically.

7. Method according to any of Claims 1 to 6,
**characterized in that**
the residual fraction is fed to the starting material yet to be separated before separation thereof by means of chromatography, where the starting material and the residual fraction are preferably mixed before the separation.

8. Method according to Claim 7,
**characterized in that**
the flow rate of the residual fraction which is fed to the starting material yet to be separated before separation thereof is controlled as a function of the content of the target component in the starting material and/or in the target product fraction.

9. Method according to any of Claims 1 to 8,
**characterized in that**
the starting material is or comprises
- a mixture of fatty acids and/or derivatives thereof, preferably a mixture of unsaturated, especially polyunsaturated, fatty acids and/or derivatives thereof, and/or
- a mixture, preferably a mixture of carboxylic acids and/or derivatives thereof, preferably a mixture of cannabinoids and/or derivatives thereof, and/or
- a mixture containing a metabolite of a polyunsaturated fatty acid, preferably of eicosapentaenoic acid (EPA) and/or of docosahexaenoic acid (DHA) and/or of docosapentaenoic acid (DPA), or a substance having the same composition as the metabolite, and/or
- a mixture containing at least one pre-resolving mediator (PRM) and/or a specialized pre-resolving mediator (SPM) which is/are preferably derived from EPA, DHA or/and from DPA, and/or
- a mixture containing at least one pre-resolving mediator (PRM), preferably 18-HEPE, 17-HDHA and/or 14-HDHA, and/or specialized pre-resolving mediator (SPM), preferably lipoxins, resolvins, protectins and/or maresins.

10. Method according to any of Claims 1 to 9,
**characterized in that**
the target component is a polyunsaturated fatty acid, preferably eicosapentaenoic acid (EPA) and/or docosahexaenoic acid (DHA), or is cannabidiol (CBD) or tetrahydrocannabinol (THC).

11. Method according to any of Claims 1 to 10,
**characterized in that**
the target component is a metabolite of a polyunsaturated fatty acid, preferably of eicosapentaenoic acid (EPA) and/or of docosahexaenoic acid (DHA) and/or of docosapentaenoic acid (DPA), or is a substance having the same composition as the metabolite.

12. Method according to any of Claims 1 to 11,
**characterized in that**
the target component is a pre-resolving mediator (PRM), preferably 18-HEPE, 17-HDHA and/or 14-HDHA, and/or at least one specialized pre-resolving mediator (SPM), preferably lipoxin, resolvin, protectin and/or maresin.

13. Chromatography apparatus, especially apparatus for supercritical fluid chromatography, having at least one separating column (5) for separating a starting material into fractions, a device for removing the fractions, a device for diverting off at least one of the fractions that have a defined target content of at least one target component of the starting material, and a device for conduction of at least a portion of the fractions that do not have the defined target content to the starting material yet to be separated,
**characterized in that**
the conduction device is set up to conduct at least a portion of the fractions wherein the content of the target component deviates less from the defined target content than the target component content of the starting material to the starting material yet to be separated.

14. Apparatus according to Claim 13,
**characterized by** a device for diverting off at least the fractions wherein the target component content deviates more from the defined target content than that of the starting material, preferably for further handling, especially further processing or/and disposal.

15. Apparatus according to either of Claims 13 and 14,
**characterized by** a device (15, 16, 17) for measuring the content of the target component in the fractions and preferably by a device for closed-loop and/or open-loop control of the fraction removal device, which is intended to use measured values determined by the measurement devices as controlled variable and/or manipulated variable for closed-loop and/or open-loop control.

## Revendications

1. Procédé de chromatographie, en particulier procédé pour la chromatographie en phase fluide supercritique, dans lequel une substance de départ à séparer est séparée en fractions au moyen de la chromatographie et au moins l'une des fractions, qui présentent au moins une teneur cible spécifiée en au moins un composant cible de la substance de départ, est évacuée en tant que fraction de produit cible, les fractions qui ne présentent pas la teneur cible spécifiée formant les fractions résiduelles et au moins une partie d'au moins l'une des fractions résiduelles étant ajoutée à la substance de départ encore à séparer, **caractérisé**
**en ce qu'**au moins une partie d'au moins l'une des fractions résiduelles, dont la teneur en composant cible s'écarte moins de la teneur cible spécifiée que la teneur en composant cible de la substance de départ, est ajoutée à la substance de départ encore à séparer.

2. Procédé selon la revendication 1,
**caractérisé**
**en ce que** les fractions résiduelles, dont la teneur en composant cible s'écarte plus de la teneur cible spécifiée que celle de la substance de départ, sont évacuées pour une manipulation ultérieure, en particulier un traitement ultérieur et/ou une élimination, la teneur cible spécifiée étant de préférence une teneur minimale et/ou une teneur maximale.

3. Procédé selon la revendication 2,
**caractérisé**
**en ce qu'**une teneur en composant cible dans la substance de départ et dans les fractions est déterminée et les teneurs en composant cible des fractions résiduelles sont de préférence comparées à celles de la substance de départ.

4. Procédé selon l'une des revendications 1 à 3,
**caractérisé**
**en ce qu'**une teneur en au moins deux, le cas échéant en plusieurs, composants cibles différents dans la substance de départ et dans les fractions est déterminée et les différentes teneurs en composant cible des fractions résiduelles sont de préférence comparées à celles de la substance de départ.

5. Procédé selon l'une des revendications 1 à 4,
**caractérisé**
**en ce que** le procédé est réalisé en continu.

6. Procédé selon l'une des revendications 1 à 5,
**caractérisé**
**en ce qu'**au moins la détermination et les comparaisons des teneurs en composant cible ainsi qu'une introduction de la fraction résiduelle dans la substance de départ à séparer sont réalisées de manière automatique.

7. Procédé selon l'une des revendications 1 à 6,
**caractérisé**
**en ce que** la fraction résiduelle est introduite dans la substance de départ encore à séparer avant sa séparation par chromatographie, la substance de départ et la fraction résiduelle étant de préférence mélangées avant la séparation.

8. Procédé selon la revendication 7,
**caractérisé**
**en ce que** le flux de la fraction résiduelle, qui est introduite dans la substance de départ encore à séparer avant sa séparation, est régulé en fonction de la teneur en composant cible dans la substance de départ et/ou dans la fraction de produit cible.

9. Procédé selon l'une des revendications 1 à 8,
**caractérisé**
**en ce que** la substance de départ est ou comprend
- un mélange d'acides gras et/ou de leurs dérivés, de préférence un mélange d'acides gras insaturés, en particulier polyinsaturés et/ou de leurs dérivés et/ou
- un mélange, de préférence un mélange d'acides carboxyliques et/ou de leurs dérivés, de préférence un mélange de cannabinoïdes et/ou de leurs dérivés et/ou
- un mélange qui contient un métabolite d'un acide gras polyinsaturé, de préférence de l'acide eicosapentaénoïque (EPA) et/ou de l'acide docosahexaénoïque (DHA) et/ou de l'acide docosapentaénoïque (DPA), ou une substance qui présente la même composition que celle du métabolite et/ou
- un mélange, qui contient au moins un pre-resolving mediator (PRM) et/ou un specialized pre-resolving mediator (SPM), qui est/sont dérivés de préférence d'EPA, de DHA et/ou de DPA, et/ou
- un mélange, qui contient au moins un pre-resolving mediator (PRM), de préférence 18-HEPE, 17-HDHA et/ou 14-HDHA, et/ou un specialized pre-resolving mediator SPM), de préférence la lipoxine, la résolvine, la protectine et/ou la marésine.

10. Procédé selon l'une des revendications 1 à 9,
**caractérisé**
**en ce que** le composant cible est un acide gras polyinsaturé, de préférence l'acide eicosapentaénoïque (EPA) et/ou l'acide docosahexaénoïque (DHA), ou du cannabidiol (CBD) ou du tétrahydrocannabinol (THC).

11. Procédé selon l'une des revendications 1 à 10,
**caractérisé**
**en ce que** le composant cible est un métabolite d'un acide gras polyinsaturé, de préférence de l'acide eicosapentaénoïque (EPA) et/ou de l'acide docosahexaénoïque (DHA) et/ou de l'acide docosapentaénoïque (DPA), ou est une substance qui présente la même composition que celle du métabolite.

12. Procédé selon l'une des revendications 1 à 11,
**caractérisé**
**en ce que** le composant cible est un pre-resolving mediator (PRM), de préférence 18-HEPE, 17-HDHA et/ou 14-HDHA, et/ou un specialized pre-resolving mediator (SPM), de préférence la lipoxine, la résolvine, la protectine et/ou la marésine.

13. Dispositif de chromatographie, en particulier dispositif pour la chromatographie en phase fluide supercritique, qui présente au moins une colonne de séparation (5) pour la séparation d'une substance de départ en fractions, une installation pour le prélèvement des fractions, une installation pour l'évacuation d'au moins l'une des fractions, qui présentent une teneur cible spécifiée en au moins un composant cible de la substance de départ, et une installation pour le guidage d'au moins une partie des fractions, qui ne présentent pas la teneur cible spécifiée, vers la substance de départ encore à séparer,
**caractérisé**
**en ce que** l'installation de guidage est conçue pour guider au moins une partie des fractions, dont la teneur en composant cible s'écarte moins de la teneur cible spécifiée que la teneur en composant cible de la substance de départ, vers la substance de départ encore à séparer.

14. Dispositif selon la revendication 13,
**caractérisé par** une installation pour l'évacuation au moins des fractions, dont la teneur en composant cible s'écarte plus de la teneur cible spécifiée que celle de la substance de départ, de préférence pour une manipulation ultérieure, en particulier un traitement ultérieur et/ou une élimination.

15. Dispositif selon l'une des revendications 13 à 14,
**caractérisé par** une installation (15, 16, 17) pour la mesure de la teneur en composant cible dans les fractions et de préférence par une installation pour la régulation et/ou la commande de l'installation de prélèvement de fractions qui est conçue pour utiliser les valeurs de mesure déterminées par les installations de mesure en tant que grandeurs de régulation et/ou de réglage pour la régulation et/ou la commande.
